(19) Europäisches Patentamt
European Patent Office
Office européen des brevets

(11) Publication number: **0 065 114 B1**

# (12) EUROPEAN PATENT SPECIFICATION

(45) Date of publication of patent specification: **30.03.88**

(51) Int. Cl.$^4$: **G 06 F 7/22**, G 06 F 15/20

(21) Application number: **82103332.1**

(22) Date of filing: **21.04.82**

## (54) Method of qualifying and sorting file record data in a text processing system.

(30) Priority: **18.05.81 US 264959**
**18.05.81 US 264797**

(43) Date of publication of application:
**24.11.82 Bulletin 82/47**

(45) Publication of the grant of the patent:
**30.03.88 Bulletin 88/13**

(84) Designated Contracting States:
**DE FR GB IT**

(56) References cited:
**US-A-3 964 029**
**US-A-4 209 845**

(73) Proprietor: **International Business Machines Corporation**
**Old Orchard Road**
**Armonk, N.Y. 10504 (US)**

(72) Inventor: **Chang, Philip Yen-Tang**
**11207 Blackmoor Drive**
**Austin Texas 78759 (US)**
Inventor: **Hoffman, Virginia Marie**
**11212 Blackmoor Drive**
**Austin Texas 78759 (US)**
Inventor: **McInroy, John Wise**
**2108 Woodmont Avenue**
**Austin Texas 78703 (US)**

(74) Representative: **Bonneau, Gérard**
**Compagnie IBM France Département de Propriété Intellectuelle**
**F-06610 La Gaude (FR)**

**EP 0 065 114 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to file record data handling in a text/data processing system, and more particularly to a method of qualifying and sorting file record data in a text processing system.

Office systems for processing text data to produce hard copies are being utilized with increasing frequency for data processing. Such text processing machines are physically structured to include all the necessary elements for data processing including a display screen for presenting to an operator a visual presentation of record data as it will appear on hard copy or be utilized by an output device. Typically, text processing systems incorporate a conventional typewriter keyboard with additional control keys for operator interface with the system controls. For data processing, operator instructions are input through the keyboard and displayed on a screen in a manner similar to the use of such machines for text processing. The display is segmented to allow data formatting instructions to be presented to the operator along with a visual presentation of the data records being processed. Thus, the display not only provides a visual presentation to the operator of the record data being processed, but also provides prompting instructions to allow interface with a text processing machine as a data operator.

Text processing systems on which data processing is carried out include electronic hardware programmed to evaluate operator keystrokes and to control the display. This electronic hardware includes memory for storing file format information and instruction data for future use for processing the file records for subsequent utilization or preparation of hard copy. Responding to the keystrokes of an operator are system controls including programmed computers which prepare the display screen for presenting to the operator file record data. Ease of operation of the machine for the operator is in large part determined by the electronics and associated computers and programs therefor.

Data processing on a text processing system is achievable by utilization of algorithms with the computer and its memory. There are, however, several differences between the processing of text data and record data in a text processing system. Typically, text which is stored, is unstructured but formatted, while file records are stored in a structured, but unformatted manner. Text data is formatted in that it includes tabs, carrier returns, etc... Due to the fact that a data file can be fairly large, structuring of the included data permits rapid access to any particular portion. However, this requires programming to achieve this rapid access. To assist an operator in the accessing of file record data, the system display screen is segmented into virtual displays or frames that includes grids to be filled in by the operator for processing of the file data. Through keying, an operator can then cause the stored record data to be qualified for keying "search" criteria.

File record data processing in text processing systems usually utilizes storage of the file record data on a disk. In the past, sorting of the data on the disk was carried out externally, that is, data was transferred from one disk to a second disk in a sort operation or sorting was completed in internal memory. With such text processing systems, a disk access is needed for the sorting of each record, which requires a large amount of memory space.

A system which avoids using a disk work space to store immediate results and minimizes the need for a large amount of memory space is described in US patent 4 209 845. The random access memory used as a sorting buffer in this system to accomplish the qualifying and sorting is a small fraction of the file. But this sorting buffer presents the drawback that it is formed of a set of a predetermined number of registers corresponding to a multiplicity of qualifying fields and sort fields, without the possibility of the operator to have some control over the speed of sorting by use of a variable buffer-space.

Therefore the object of the invention is a method of qualifying and sorting file records which enables the use of different size sort buffers. Where high speed sorting is required, a sort buffer with greater storage space will provide a faster sorting, whereas a buffer of more restricted space will provide corresponding slower sorting.

According to the present invention, data sorting is achieved by use of a sort buffer for temporarily storing qualified file records and comprising further a data section storing the file records, a record header section including a list of the length of each record in the data section along with a pointer identifying the location of the record therein, and a bit map section including a record identifying bit for each record.

The method which is operated under the control of the processor, comprises the steps of accessing each of the file records in the data storage and determining whether an accessed file record qualifies for transfer to the sort buffer. Then, the method consists in setting the corresponding record identifying bit in the bit map section from a first state to a second state, if the accessed file record qualifies, comparing the rank of the qualified file record in the data storage with the rank of the lowest ranked filed record in the sort buffer, transferring the compared qualified file record in the data storage to unused space in the sort buffer, if the rank of the qualified file record is higher than the rank of the lowest ranked file record, locating the qualified file record transferred to the sort buffer at a level based on the rank thereof, and resetting the corresponding record identifying bit in the bit map section to the first state for the qualified file record now located in the sort buffer.

The above operation is repeated beginning with the lowest ranked record in the previous operation and continuing until the sorting of the record data file is complete. That is, for each pass the sort buffer is loaded with the best available record file data and the contents are stored or printed. The operation resumes at the lowest qualified file previously transferred to the buffer.

It there are more records in a file than the number of record identifying bits in the bit map, then the remainder of the records are represented by one bit in an overflow portion. In this situation, each of the record identifying bits that represent only one record are treated as previously described. For the overflow bit, a register is set for all remaining qualified records to be identified by one bit and on each pass these records are sorted on the basis or ranking. Thus, on each sort pass which transfers records from a file to the sort buffer, records identified by the overflow bit are sorted by ranking.

The invention will now be described in reference with the following drawings wherein

Figure 1 is a basis block diagram of a text/data processing system including a keyboard, processor, memory storage and a display screen for visual presentation to an operator of text/data and operating or prompting instructions.

Figure 2 is a block diagram showing logic hardware detail of the processor of Figure 1 with interconnecting control and data bus paths.

Figure 3 is a detail showing the organization of the storage of the system of Figure 1 as structured for data processing.

Figure 4 is a block diagram showing data transfer and structuring of a sort buffer for receiving qualified data records.

Figure 5 is a high level flow chart for the basic algorithm for processing record data from a disk to the sort buffer on a record qualified basis.

Figure 6 is a more detailed flow chart of the basic algorithm as generalized in Figure 5 showing the major functions for sorting file record data.

Figure 7 is a detailed flow chart for qualifying, transferring and locating record data on a disk storage to a sort buffer for data handling in the text/data processing system of Figure 1, and

Figure 8 is a flow chart of an algorithm for presorting record data prior to sorting and transferring to a sort buffer as detailed by the flow chart of Figure 7.

Referring to Figure 1, a text and data processing system is shown including a processor 10, interconnected by means of a data bus 12 and control lines 14 to a keyboard 16. Included on the keyboard are conventional alpha-numeric characters found on the standard typewriter keyboard. In addition the keyboard includes symbol keys, such as backspace, carrier return and tab settings along with function keys used to instruct the system to perform certain operations, to control the way a display is created, or to provide information about stored textual and/or record data. In addition, the keyboard includes code keys that are used in conjunction with another key to input special instructions to the processor 10.

Keystroke data transferred to the processor 10 over the data bus 12 in the form of 7-bit bytes is processed by instructions stored in a random access memory 18 by means of an interconnecting data bus 20. The random access memory 18 tores the keystroke data bytes, and file record data in addition to instructions for operation of the processor 10.

Also connected to the random access memory 18 by means of a data bus 22 is a display refresh buffer 24 that receives display data for formatting a visual presentation on a display screen 26. Control signals for operation of the display screen 26 are provided along a data bus 28.

Typically, the display screen 26 is a cathode ray tube, and in a preferred embodiment of the present invention, is formatted into multiple virtual images, the major one of which displays twenty lines of text or data information. The total line capacity of the display is twenty-five lines with the first line reserved as a virtual display for document formatting information and the bottom two lines of the display reserved for virtual images as a prompt line and a message line to give an operator instructions on the control of the text/data processing system of Figure 1.

Referring to Figure 2, the processor 10 is further detailed to show typical logic hardware elements as found in such processors. The processor may be a commercially available unit, such as from Intel Corporation and identified by the Number 8086. Typically the processor includes a control logic unit 30 which responds to interrupts on a device bus 32 from the keyboard 16. The control logic unit 30 is also connected to the data and address bus 34 interconnected to various other logic units of the processor 10.

In response to a fetch instruction from the random access memory, the control logic unit 30 generates control signals to other logic elements of the processor. These control signals are interconnected to the various elements by means of a control line 36 which is illustrated directly connected to an arithmetic logic unit 38 and identified as a "control" line 36 to other elements of the processor. Synchronous operation of the control unit 30 with other logic elements of the processor 10 is achieved by means of clock pulses input to the processor from an external clock source 40. This instruction bus is also shown interconnected to other logic elements of the processor detailed on Figure 2.

Data and instructions to be processed in the processor 10 are input through a bus control logic unit 42. Data to be processed may also come from program input/output control logic 44. The bus control logic 42 interconnects storage elements of the random access memory 18 and receives instructions for processing data received from the input/output control 44 or received from the random access memory. Thus, the input/output control 44 receives data from the keyboard 16 or the random access memory 18 while the bus control logic 42 receives instructions and/or data from the same memory. Note that different storage sections of the random access memory are identifiable for program storage and data storage.

Device control information from the processor 10 is output through the program input/output controller 44 over a data bus (12, 20). Input data on the data bus (12, 20) from the keyboard 16 is processed internally through the processor by instructions on the bus 34 to the scratch register 52. The arithmetic logic unit 38 in response to a control signal on line 36 and in accordance with instructions received on the memory bus 46 performs arithmetic computations which may be stored in temporary scratch registers 52. Various other transfers of data between the arithmetic logic unit 38 and other logic elements of the processor are of course possible. Such traditional transfers may be to a status register 60, a data point register 56 or a stack pointer register 58. Also in the data stream for these various logic elements by means of the bus 34 is a program counter 54.

A particular operating sequence for the processor 10 is determined by instructions and data on the memory bus 46 and input data on the bidirectional bus (12, 20). As an example, in response to received instructions, the processor transfers data stored in the scratch registers 52 to one of the registers 56, 58 or 50. Such operations of processors as detailed in Figure 2 are considered to be well known and understood by one of ordinary skill in the data processing field. A detailed description of each operation of the processor of Figure 2 for the described invention would be counter-productive to an understanding of the invention as claimed.

Referring to Figure 3, there is shown a block diagram of the organization the storage of the system of Figure 1 for data processing and includes the keyboard 16 connected by way of a data bus 12 to the record display buffer 24. Also connected to the record display buffer 24 is the display 26 by means of the data bus 28. As formatted, the data processing system includes a printer 70 and a disk drive 80, all external devices, connected to data storage buffers enclosed within the dotted outline. It should be understood that each of the identifiable areas of buffer storage within the dotted outline comprise storage locations addressable by conventional techniques. Thus, keystrokes from the keyboard 16 are received by the display buffer 24 over the data bus 12.

Stored within memory of the system are application programs consisting of instructions and data bytes transferred between the various buffers including the display buffer 24, a sort buffer 64, a text storage buffer 76, and a data input/output buffer 82. As the name implies, the text storage buffer 76 contains a data stream of data for processing in accordance with the present invention.

The text storage buffer interconnects by means of data lines to the printer 70 and the disk drive 80. Record data from the disk drive 80 is transferred through the data input/output buffer 82 into the sort buffer 64 as will be explained. Records properly sorted within the sort buffer 64 are transferred through the input/output buffer 82 through the display buffer 24 to the display 26 by means of the data line 28. This record data is also transferred through the text storage buffer 76 to the printer 70 where stored instructions direct the making of a permanent hard copy record.

By operation of the system of Figures 1—3 in conjunction with the processor 10, in the manner to be described with reference to Figures 4—18, a sorting of file record data is made for presentation on the display screen 26.

Referring to Figure 4, records to be sorted are stored on a disk which is inserted by the disk drive 80 for processing in accordance with a sort program previously stored. Stored on the disk along with a data record is the byte length of the record which information is required for sorting in accordance with the sorting program. Data records on the disk are sorted by evaluating one or more fields such as last name, zip code, and age. Typically, up to five fields are available for sorting data records. Each file record is read from the disk by the disk drive 80 and evaluated by the sort program and transferred through the input/output buffer 82 for storage in the sort buffer 64.

As configured, the sort buffer 64 includes a record header section 86, a record data section 88, and a bit map section 90, the latter being explained with reference to Figure 8. The record header section includes a list of the length of each record in the data section 88 along with a pointer identifying the location of the record in the data section. While each entry into the header section 86 is of a fixed length, entries into the record data section vary with the length of the record transferred from the disk drive 80. In one embodiment of the invention, the sort program stores the record header bytes starting from the first position of the record section 86 and locates the record data starting at the last position in the record section 88. This technique makes maximum use of the sort buffer size.

The speed with which sorting of record data from the disk drive 80 is completed depends on the storage length of the sort buffer 64. The sort algorithm to be detailed with reference to Figures 5—7 is a multiple pass algorithm that continues to transfer record data into the data section 88 until the next sorted record overflows the data section. The records sorted and stored in the data section 88 are then transferred out of the sort buffer 64 through the input/output buffer 82 to the display 26, or through the text storage buffer 76 to the printer 70, or for other use as appropriate. Thus, the larger the sort buffer, the fewer passes required of the sort program for clearing all records on a disk. Typically, the sort buffer varies from 8 K-bytes in length to 40 K-bytes which includes the three sections 86, 88 and 90.

Referring to Figure 5, after the processor 10 receives a signal that a disk has been inserted into the disk drive 80, the sort program starts at entry 92 and proceeds to run the sequence of steps to complete the process of block 94. That is, each data record on the disk is qualified for selection and ranked for sorting and arranging in the sort buffer 64. The first record accessed on the disk is transferred through the input/output buffer 82 to the first position and the data section 88. The header section 86 is also loaded with pointers identifying the record, the record length in bytes and the address of the record in the data section 88.

After this first record has been located in the data section 88, a test is made by the sort program to determine if there are additional records on the disk that have not been sorted and processed to the data section 88. If additional records are remaining on the disk, then the program remains to block 94 to evaluate the next record on the disk. Ranking criteria of the next record is compared with ranking criteria of the previously transferred record to determine if it has a higher ranking or a lower ranking. For a record having a lower ranking than the previously transferred record, the data is transferred through the buffer 82 and located in the data section 88 at the next available storage location. Information for the next record is stored in the header section 86, which as previously described, includes both record length and record location in the data section.

The algorithm remains in step 94 so long as there is a record on the disk that has not previously been transferred to the buffer 64. When the next record on the disk has ranking criteria with a higher level of rank than previously transferred records, the next record will be transferred through the buffer 82 and located in the data section 88 below the next highest ranked record in the data section. All records in the data section 88 having a lower ranking are relocated in the data section. Thus, each time a record is located in the data section 88 having a higher ranking than previously transferred records, a reassembly of the data is required. For example, if the records are being sorted on last names and records A, B, F, M and R have been previously transferred to the data section 88 and the next record is sorted on the record D, then all records having a ranking lower than D will be shifted in the data section 88. The new arrangement will be as follows: A, B, *D*, F, M, R.

The above description of the sorting process assumes that space remains in the data section 88 for all of the previously transferred records. For each transfer of a record into the sort buffer 64, an evaluation is made by the sort program to determine if additional byte space is available in the data section for storage of transferred records. If the next record to be transferred has a lower ranking than any previously transferred records and its length would cause an overflow of the data section 88, then this next record will not be transferred into the data section. It should be noted, however, that the sort program continues to evaluate each record on the disk to determine if one of higher ranking than previously transferred records remains. A record of a higher ranking, as explained, will replace a record of a lower ranking. If the transferring of a record having a higher ranking causes the data section to overflow then records of a lower qualification will be deleted.

After the data section 88 has been filled to the extent possible without overflowing, with the highest ranked records not previously sorted from the disk, the sort program makes the test 96. If the latter test results in an affirmative response, the program advances to a "use record" step 98 which outputs the record in the data section 88 to the disk 80 and also outputs the records to the printer 70 for producing hard copy. The data may also be used in other processes as required. If test 96 results in a negative response, the sequence then steps to the end step 97.

Referring to Figure 6, there is shown in greater detail the sort algorithm as previously outlined in Figure 5. The sort algorithm starts at entry 92 and completes a test 100 to determine if all the records on the disk have been processed for possible transfer into the data section 88. If the end of file test produces a negative result, then the algorithm advances to a step 102 to access the next record on the disk not previously sorted and transferred to the buffer 64 without subsequent deletion. The next record is evaluated at test 104 to determine if it qualifies for the sort program that is being run. That is, if the sorting is being made on last names beginning with the letters A through M and the next record is a last name beginning with the letter R, then the next record does not qualify for the sort and the sequence returns to the test 100. So long as the additional records are to be sorted from the disk the loop including 100, 102 and 104 recycles until a qualified record is found at test 104.

Upon location of a qualified record on a disk a test 106 is made to determine if the next record has a higher level of ranking than the last record located in the buffer 64. When the next record has a lower ranking than the last record located in the buffer then the test 106 produces a negative result and the sequence advances to a test 108 to determine if the next record will fit in the buffer 64 without overflowing the data section 88. If the length of the next record is in excess of the space available in the data section 88, then the sort sequence returns to the test 100.

The sequence including 100, 102, 104, 106 and 108 recycles each time the next qualified record has a lower level of ranking than the last record in the buffer 64 and the length of this record is greater than the space available in the data section 88.

When space is available in the data section 88 as determined by the test 108, then the sequence advances to a step 110 to transfer the next record through the buffer 82 into the data section 88. This next record is located following the last record stored in the data section. The identification, length and location of this record is also stored in the header section 86. After this next record has been added to the data section 88 at sequence step 110, the sort algorithm recycles to the "end of file" test 100.

When the next record has a higher ranking than the lowest ranked record in the buffer 64, the test 106 produces an affirmative result which advances the sequence to a test 112 to determine if sufficient byte space remains in the buffer 64 to accept the record under consideration. If the test 112 produces a negative response, the sequence advances to a step 114 which deletes the lowest ranked record from the buffer 64 and the processor recycles to the test 112. The sequence of test 112 and the step 114 are recycled, each time deleting the lowest ranked record from the buffer 64, until an affirmative result is produced at the test 112.

An affirmative result from the test 112 advances the sequence to a step 116 and the record which resulted in the affirmative result of the test 106 is added to the buffer 64 in the data section 88 with the record located in the sort order as determined by the sort algorithm. Following the location of this next record to the sort buffer 64 the sequence recycles to the "end of file" test 100.

The sequence of tests and steps 100, 102, 104, 106, 108, 110 112, 114 and 116 is run until all the file records have been evaluated and the data section 88 has no more available byte space to accept the next qualified record on the disk. At this time the "end of file" test 100 produces an affirmative result and the sequence advances to a test 118. If any records are found to have been located in the data section 88 the test 118 produces an affirmative result advancing the sequence to a step 120 to configure the input/output buffer 82 to transfer the data record over the input/output bus to the disk 80 or other output device including the hard copy printer 70.

At the completion of the transfer of the records in the sort buffer 64 to the disk 80 or other output device, the sequence returns to test 100. The sequence starting at test 100 and continuing through step 116 is repeated for the next highest ranked records on the disk, that is, the next highest ranked following the lowest ranked record previously transferred from the buffer 64. The process as described above is recycled again loading the data section 88 with the highest ranked records still remaining on the disk. The test 118 and step 120 are again run and this next batch of records are transferred to the disk 80 or other output device. This recycle process continues until the test 118 produces a negative result indicating that on the previous pass no records were added to the data section 88 signifying that all records on the disk have been sorted. The sequence then steps to an "end" step 122 and the sort program shuts down the processor.

For a more detailed explanation of the sort process, reference is now made to Figure 7. The flow chart of Figure 7 adds additional details to the flow chart of Figure 6 and only such additional details will be described with reference to Figure 7. The sequence starts at entry 92 and after the test 100 the sequence advances to the "access next record" step 102 which is followed by a test to determine the condition of the input/output buffer 82. This test is made at 124. This sequence of the algorithm minimizes data movement between the disk drive 80 and the sort buffer 64 by loading the buffer 82 prior to transfer of data into the sort buffer. That is, file records from the disk drive 80 are batched into the input/output buffer 82 until this buffer is full. With the buffer 82 full, or not able to accept the next record, the test 124 produces an affirmative result and the sequence advances to a step 126 which moves all the data in the input/output buffer 82 into the sort buffer 64 as a batch.

The header section 86 is continuously updated with new pointers for the additional records being input and located into the data section 88. Note, that only those records having new pointers in header section 86 are transferred to data section 88. Thus, not all records transferred into the buffer 82 are subsequently transferred to the section 88. Those records not transferred from the buffer 82 are deleted from the buffer 82.

After the data in the input/output buffer 82 has been transferred into the sort buffer 64 the test 124 produces a negative result which advances the sequence to the test 104. A positive result of the test 104 advances the sequence to a step 128 which compares the sort fields of the next qualifying record on the disk with the sort fields of the lowest ranked record in the data section 88. It is during the running of this step that the location of the record is determined when transferred to the data section 88. After the level of ranking has been determined at the step 128, the sequence advances to the test 106 followed by the test 108 which evaluates if the free space left in the sort buffer 64 is greater than the length of the next qualifying record. At step 110, a negative result recycles the sequence and a positive result adds the record header at the end of the header area because the record is worse than the last record in buffer, and the sequence is recycled.

A positive result of the test 106 advances the sequence to the test 112 which determines if the free space left in the buffer 64 is greater than the length of the new record. If not, the step 114 is run to delete the last record to increase free space in the data section 88. When enough free space is made available in the data section 88 to accept the next qualifying record on the disk, the sequence advances through an affirmative route to the step 116 which makes a binary search of the data in the header section 86 to evaluate where the next record fits into the record previously transferred and located in the data section 88. The record header is inserted into the middle of headers, so that all headers point records in sorted order. Data identifying the record, its length, and its location in the data section 88, are inserted into the header 86 during running of the step 116. The sequence then returns to the test 100. When there are no more records from the disk the sequence advances through the affirmative route to the test 118 and the step 120 or the end 122.

Referring to Figure 8 there is shown a flow chart of an expansion of the basic sort algorithm of Figures 5—7 which provides increased sort efficiency. The algorithm of Figure 8 can be considered a presort sequence and utilizes the bit map section 90 of the sort buffer 64. With the program of Figure 8 loaded into the processor 10 along with the basic sort program of Figures 5—7, the sorting of records on a disk inserted into the disk drive 80 commences at a start 130. Note, where the flow chart of Figure 8 incorporates tests of steps previously described the same reference number will be applied.

Following the start 130, a "first pass" test 132 is made to determine if the records on the disk have been previously qualified by a first pass algorithm. In the first pass through the file the records are qualified and the test proceeds along the affirmative path to the first pass algorithm 134 which is detailed in Figure 7 and commences at the "access next record" step 102. The algorithm of Figure 7 is completed for the first pass to identify qualified records on the disk. Note, that in order to select the qualified records all the records in the file must be evaluated and qualified. At the same time, a record identifying bit is set for each record in the bit map section 90 by sequencing the algorithm of Figure 8 through the test 136 along the negative path back to the first pass test 132.

When all the record identifying bits for the qualified records in the bit map section 90 are set to a first state (a logic ONE) and the data section 88 no longer contains sufficient space to accept the next highest ranked record, the test 100 produces an affirmative result advancing the sequence through the test 118 and the "use record" step 120 or step to the end 122.

Upon completion of the first pass all the record identifying bits of the records in the data section 88 that have been read out for use in the disk 80, or other output device, will have been set to the first state and then reset to the second state (logic ZERO) indicating that the record has been sorted and need not be considered again for future passes through the disk file. All other records on the disk will have the record identifying bit set to the first state. Upon completion of the first pass the test 132 causes the sequence to proceed along the negative path to a test 138 to determine if additional first state bits are found in the section 90. If additional first state bits are available the negative path from the test 138 goes to an "access record" step 140 which searches the disk file for the next record with the record identifying bit set to one, that is, the first state. Following identification of the next record with an identifying bit set to one, the test 124 is made which proceeds along the affirmative path to the "move data" step 126 and back to the "end of bit map" test 138.

If additional space remains in the buffer 64 the sequence of Figure 8 advances to an "insert record" step 142 which begins at the comparison step 128 of Figure 7 and follows the path there detailed. However, the negative path from the test 108 of Figure 7 returns the sequence of Figure 8 to the "end of bit map" test 138 as does a completion of the "add record" step 110 and also a completion of the binary search step 116. Thus, the "insert record" step 142 includes comparison of the header data in the header section 86 and space management of the sort buffer 64 as previously described. Note, that during the pass of the sequence through the step 140 all those records that have the record identifying bit set to zero, that is, the second state, will be bypassed thereby reducing the number of records that must be evaluated for transfer to the data section 88 of the buffer 64.

Following the running of step 142, each time the data section 88 includes the most qualified records remaining in the disk file having a record identifying bit in the first state, the sequence including test 118 and step 120 are run to output these records as previously described. The records thus transferred from the data section 88 will have the record identifying bit then set to zero, that is, the second state.

The sequence through path of test 138 and step 140 continues until all of the record identifying bits in the bit map section 90 are reset to the second state as shown by a positive result of the test 138. Following the positive path from the test 138 the sequence advances to a bit overflow test 144 which produces a negative result when the bit map section 90 has sufficient space to contain a record identifying bit for each record on the disk. Thus, the sequence from the test 138 through step 140 continues for each bit in the bit map until the last bit has been checked.

With the last bit in the bit map section 90 is checked and a negative result from the test 144 the sequence advances to the test 136 and if a record identifying bit in the map section 90 is in the first state, that is, a one, then the program recycles to the first pass test 132 and again takes up at the "end of bit map" test 138. This sequence continues until all the record identifying bits have been set to zero advancing the program through the test 136 along the affirmative path to the end 146. At this time all the qualifying records on the disk have been sorted through the sort buffer 64 and output to the disk 80 or other output device.

When the number of records to be sorted is greater than the space available for record identifying bits in the map section 90, the first pass algorithm 134 will be run as previously described with one exception. That is, when the last record identifying bit is located, and more than one record remains on the disk, all remaining records will be assigned to the last record identifying bit. After the first pass the test 132 advances the sequence to the test 138 which inserts records into the data section 88 as previously explained through step 140, test 142, step 126 and step 142.

When all of the record identifying bits in the bit map section have been reset to the second state as determined by the test 138 the overflow test 144 is made which, when the overflow bit has been set, will produce a positive result advancing the presort algorithm to a step 148. Step 146 resets the processor to run the program of Figure 7 for each record covered by the overflow bit. The algorithm of Figure 7 is run until the "end of file" test 100 produces a positive response thereby advancing the sequence to the test 136 which recycles the algorithm of Figure 8 to the first pass test 132.

After all the records assigned to the overflow bit have been evaluated for storing and the data section 88 loaded with the highest ranked records the algorithm follows through the path of tests 132 and 138 through the step 140, again sorting records assigned identifying bits. Again the test 144 and the step 148 are completed for records in the overflow bit. The presort program then continues until all the records in the disk file have been sorted into the buffer 64 and transferred to an output device.

**Claims**

1. Method of qualifying and sorting file records transferred from a data storage (80) into a sort buffer (64) for a temporary retention in an order based on a selected ranking in a text processing system comprising a processor (10), said data storage and said sort buffer said method which is operated under the control of said processor, and which comprises the steps of accessing each of said file records, in said data storage and determining whether an accessed file record qualifies for transfer to the sort buffer, being characterized:

in that said sort buffer comprises a data section (88) storing said file records, record header section (86) including a list of the length of each record in said data section along with a pointer identifying the location of the record therein, and a bit map section (90) including a record identifying bit for each record, the header section being continuously updated with new pointers for additional records whereby only those records having new pointers are transferred to the data section,

(a) in that during a first pass the rank of a qualified file record in said data storage is compared with the rank of the lowest ranked filed record in said sort buffer,

(b) in that if the rank of the qualified file record is higher than the rank of the lowest ranked file record in said sort buffer, the compared qualified file record is transferred to unused space in the data section in said sort buffer below the next higher ranked record in said data section, so that the qualified file record transferred to the sort buffer is located at a level based on said rank thereof, and the records in the sort buffer having a lower ranking are relocated,

(c) in that for all qualified records the corresponding record identifying bits in said bit map section are set to a first state,

(d) in that upon completion of the first pass all the record identifying bits of the records in the data section that have been read out for use in the data storage will have been reset to a second state indicating that the record has been sorted and need not be considered again for further passes through said data storage.

The method according to claim 1 characterized in that

— step (b) to (d) are repeated for each qualified file record in said data storage (80) until said sort buffer (64) has been loaded with the highest ranked records in said data storage without overflowing, and

— (f) said highest ranked records are output from said sort buffer.

3. The method according to claim 2 characterized in that steps (d) to (f) are repeated for the remaining qualified file records in said data storage (80).

4. The method according to claim 1, 2 or 3 characterized in that, when there are more records in a file than the number of identifying bits in said bit map section (90), the remainder of the records are represented by one bit in an overflow section, a register being set for all remaining qualified records to to be identified by this one bit and said records being sorted on the basis of ranking.

**Patentansprüche**

1. Verfahren der Qualifikation und Ausgabe von Dateiaufzeichnungen, die aus einem Datenspeicher (80) in einen Sortierbuffer (64) übertragen werden, um dort vorübergehend festgehalten zu werden, in einer Reihenfolge, die auf einer ausgewählten Rangordnung in einem Textverarbeitungssystem mit einem Prozessor (10), besagter Datenspeicherung und besagtem Sortierbuffer beruht, wobei besagtes Verfahren unter Kontrolle des besagten Prozessors ausgeführt wird und die Schritte des Zugriffs an jede der besagten Dateiaufzeichnungen in besagtem Datenspeicher enthält, sowie die Bestimmung, ob eine angesprochene Dateiaufzeichnung die Voraussetzungen die den Transfer in den Sortierbufferspeicher erfüllt, dadurch gekennzeichnet:

dass besagter Sortierbufferspeicher einen Datenabschnitt (88) enthält, in dem besagte Datenaufzeichnungen gespeichert werden, einen Aufzeichnungskopfabschnitt (86) mit einer Liste von der Länge einer jeden Aufzeichnung in besagtem Datenabschnitt, zusammen mit einem Zeiger, der die Stelle der Aufzeichnung darin identifiziert, und einem Bit-Kartenabschnitt (90), der ein Aufzeichnungsidentifizierbit für jede Aufzeichnung enthält, wobei der Kopfabschnitt ständig mit neuen Zeigern für zusätzliche Aufzeichnungen berichtigt wird, wodurch nur die Aufzeichnungen mit neuen Zeigern in den Datenabschnitt übertragen werden,

(a) dadurch, dass in einem ersten Durchgang die Reihenfolge einer qualifizierten Datenaufzeichnung in besagtem Datenspeicher mit der Reihenfolge der Aufzeichnung mit dem niedrigsten Rang in besagtem Sortierbufferspeicher verglichen wird,

(b) dadurch, dass, wenn die Rangfolge der qualifizierten Datenaufzeichnung höher ist als der Rang der niedrigsten geordneten Datenaufzeichnung in besagtem Sortierbufferspeicher die verglichene qualifizierte Datenaufzeichnung in unverwendeten Raum im Datenabschnitt im besagten Sortierbufferspeicher unter der Datenaufzeichnung mit dem nächsthöheren Rang in besagtem Datenabschnitt eingereiht wird, sodass die qualifizierte Datenaufzeichnung, die in den Sortierbufferspeicher übertragen wird, in einer Ebene eingeordnet wird, die auf deren Rang beruht, und die Aufzeichnungen im Sortierbufferspeicher mit einem niedrigeren Rang neu eingeordnet werden,

(c) dadurch, dass für alle qualifizierten Aufzeichnungen die entsprechende Aufzeichnungsidentifizierbits in besagtem Bit-Kartenabschnitt in einen ersten Zustand gebracht werden,

dadurch, dass nach Erfüllung des ersten Durchgangs alle Aufzeichnungsidentifizierbits der Aufzeichnung im Daten
abschnitt, die für die Verwendung im Datenspeicher ausgelesen wurden, in einem zweiten Zustand zurückgesetzt werden, der anzeigt, dass die Aufzeichnung sortiert wurde und nicht wieder für weitere Durchgänge durch besagten Datenspeicher berücksichtigt zu werden braucht.

2. Verfahren gemäss Anspruch 1, dadurch gekennzeichnet, dass

— Schritt (b) für jede qualifizierte Datenaufzeichnung im besagten Datenspeicher (80) wiederholt werden müssen, bis besagter Sortierbufferspeicher (64) mit den Aufzeichnungen mit dem höchten Rang in besagtem Datenspeicher geladen wurde, ohne überzufliessen, und

— (f) besagte Aufzeichnungen mit dem höchsten Rang aus besagtem Sortierbuffer ausgegeben werden.

3. Verfahren gemäss Anspruch 3, dadurch gekennzeichnet, dass die Schritte (d) bis (f) für die verbleibenden qualifizierten Datenaufzeichnungen im besagten Datenspeicher (80) wiederholt werden.

4. Verfahren gemäss Anspruch 1, 2 oder 3, dadurch gekennzeichnet, dass, wenn mehrere Aufzeichnungen in einer Datenreihe sind, als die Anzahl der Identifizierbits in besagtem Bit-Kartenabschnitt (90), der Rest der Aufzeichnungen durch ein Bit in einem Überflussabschnitt dargestellt wird, und dass ein Register für alle verbleibenden qualifizierten Aufzeichnungen eingesetzt wird, um durch dieses eine Bit identifiziert zu werden, und dass besagte Aufzeichnungen auf der Grundlage der Rangfolge sortiert werden.

**Revendications**

1. Méthode de qualification et de classement d'enregistrements de fichier transférés d'une mémoire de données (80) dans une mémoire intermédiaire de classement (64) pour un emmagasinage temporaire dans un ordre fondé sur un classement sélectionné dans un système de traitement de texte comprenant un processeur (10), ladite mémoire de données et ladite mémoire intermédiaire de classement, ladite méthode qui est exécutée sous la commande dudit processeur et qui comprend les étapes d'accès à chacun des enregistrements de fichier dans ladite mémoire de données et de détermination de la qualification d'un enregistrement de fichier accédé pour son transfert à la mémoire intermédiaire de classement, étant caractérisée en ce que:

ladite mémoire intermédiaire de classement comprend une section de données (88) emmagasinant lesdits enregistrements de fichier, une section d'en-têtes d'enregistrements (86) comprenant une liste de la longueur de chaque enregistrement dans ladite section de données ainsi qu'un indicateur identifiant l'emplacement de l'enregistrement dans ladite mémoire, et une section de bits d'identification (90) comprenant un bit d'identification d'enregistrement pour chaque enregistrement, la section d'en-têtes étant continuellement mise à jour avec de nouveaux indicateurs pour des enregistrements supplémentaires, ce qui fait que seuls les enregistrements ayant de nouveaux indicateurs, sont transférés à la section de données,

(a) pendant un premier passage, le rang d'un enregistrement de fichier qualifié dans ladite mémoire de données, est comparé au rang de l'enregistrement de fichier avec le rang le plus faible dans ladite mémoire intermédiaire de classement,

(b) si le rang de l'enregistrement de fichier qualifié est plus élevé que le rang de l'enregistrement de fichier dont le rang est le plus faible dans ladite mémoire intermédiaire de classement, l'enregistrement de fichier qualifié comparé est transféré à un emplacement non utilisé de la section de données dans ladite mémoire intermédiaire de classement en dessous de l'enregistrement de -rang plus élevé suivant dans ladite section de données, si bien que l'enregistrement de fichier qualifié transféré, à la mémoire intermédiaire de classement, est situé à un niveau fondé sur son rang et les enregistrements dans la mémoire intermédiaire de classement ayant un rang inférieur sont repositionnés,

(c) pour tous les enregistrements qualifiés, les bits d'identification d'enregistrements correspondants dans ladite section de bits d'identification, sont conditionnés dans un premier état,

(d) à la fin du premier passage, tous les bits d'identification d'enregistrements des enregistrements dans la section de données qui ont été lus en sortie pour être utilisés la mémoire de données, auront été restaurés dans un second état indiquant que l'enregistrement a été classé et qu'il n'est pas nécessaire de le prendre à nouveau en considération pour d'autres passages dans ladite mémoire de données.

2. La méthode selon la revendication 1 caractérisée en ce que;

— les étapes (b) à (d) sont répétées pour chaque enregistrement de fichier qualifié dans ladite mémoire de données (80) jusqu'à ce que ladite mémoire intermédiaire de classement (64) ait été chargée avec les enregistrements du rang le plus élevé dans ladite mémoire de données sans dépassement, et

— (f) lesdits enregistrements du rang le plus élevé sont délivrés en sortie par ladite mémoire intermédiaire de classement.

3. La méthode selon la revendication 2 caractérisée en ce que les étapes (d) à (f) sont répétées pour les enregistrements de fichier qualifiés restant dans ladite mémoire de données (80).

4. La méthode selon la revendication 1, 2 ou 3 caractérisée en ce que, lorsqu'il y a plus d'enregistrements dans un fichier que la nombre de bits d'identification dans ladite section de bits d'identification (90), le reste des enregistrements est représenté par un bit dans une section de dépassement, un registre étant conditionné pour tous les enregistrements qualifiés restants à identifier par ce bit et lesdits enregistrements étant classés sur la base du rang.

FIG. 1

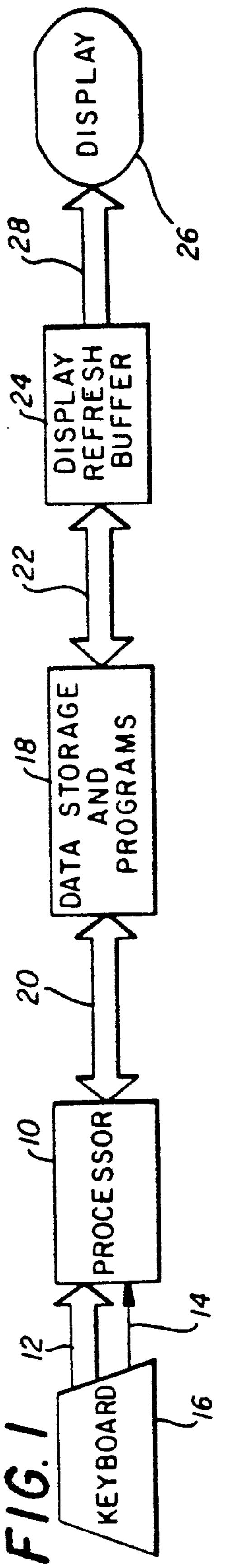
KEYBOARD
12
14
16
PROCESSOR
10
20
DATA STORAGE AND PROGRAMS
18
22
DISPLAY REFRESH BUFFER
24
28
DISPLAY
26

FIG. 3

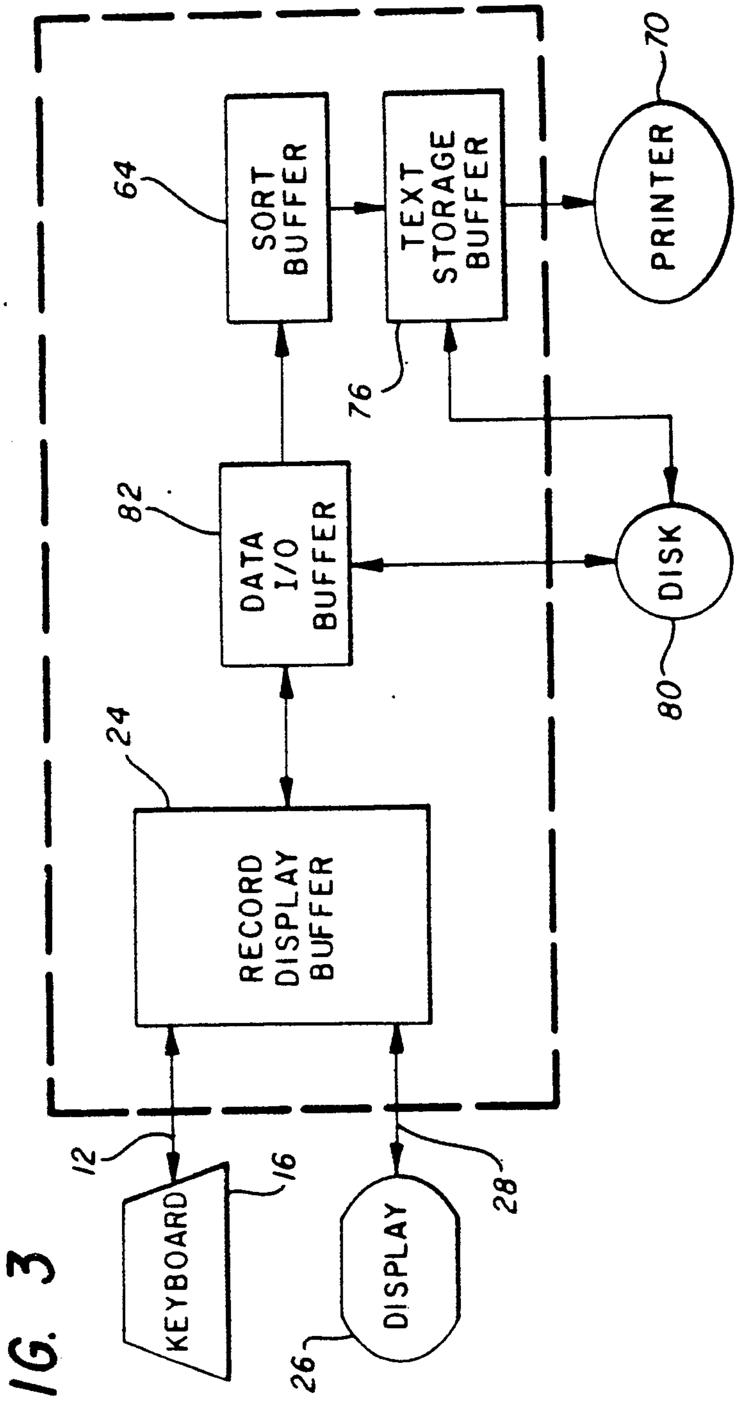
KEYBOARD
12
16
DISPLAY
26
28
RECORD DISPLAY BUFFER
24
DATA I/O BUFFER
82
SORT BUFFER
64
TEXT STORAGE BUFFER
76
PRINTER
70
DISK
80

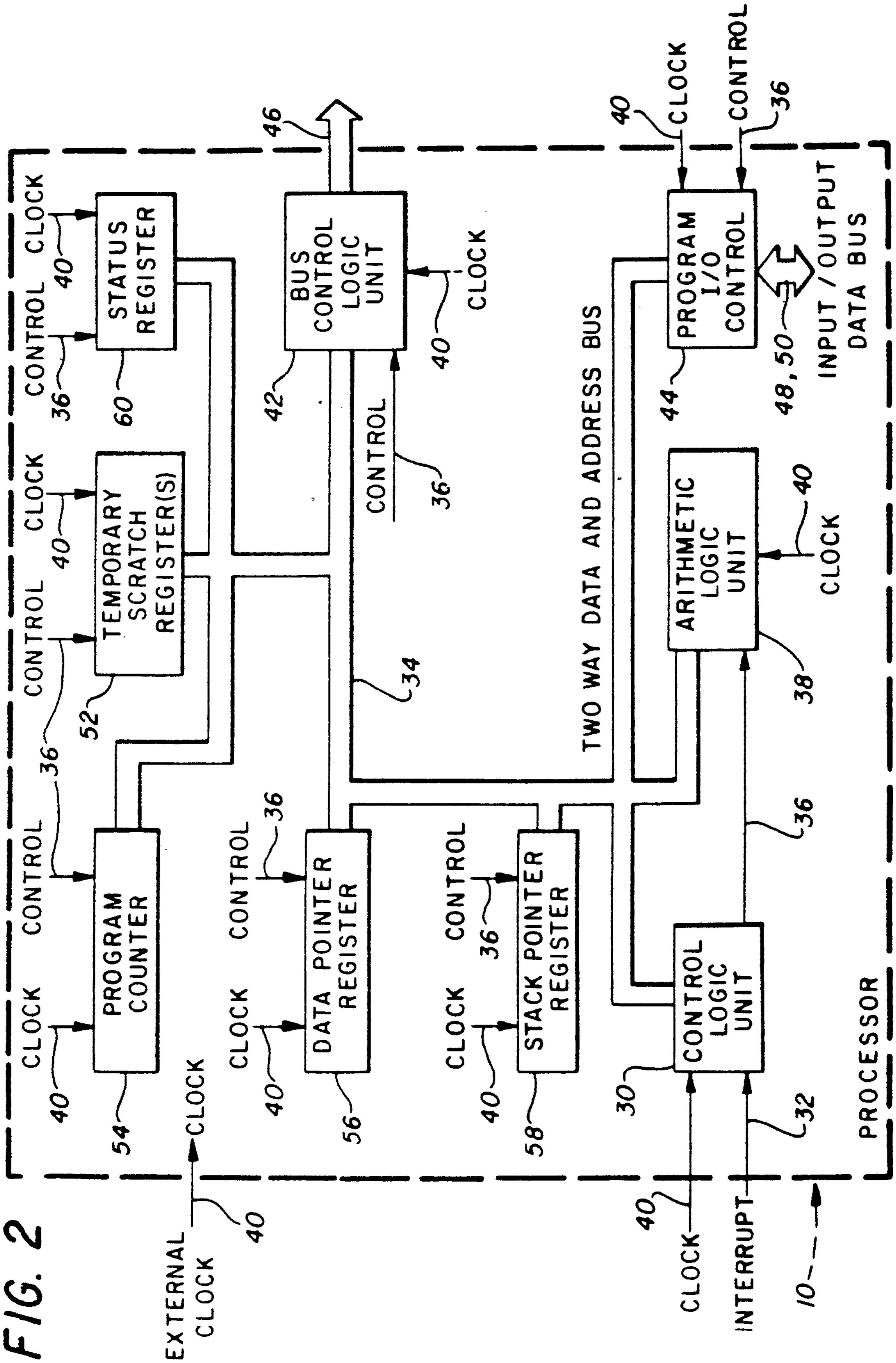
STATUS REGISTER
TEMPORARY SCRATCH REGISTER(S)
PROGRAM COUNTER
BUS CONTROL LOGIC UNIT
DATA POINTER REGISTER
STACK POINTER REGISTER
TWO WAY DATA AND ADDRESS BUS
PROGRAM I/O CONTROL
ARITHMETIC LOGIC UNIT
CONTROL LOGIC UNIT
INPUT / OUTPUT DATA BUS
PROCESSOR
CONTROL
CLOCK
EXTERNAL CLOCK
INTERRUPT
10
30
32
34
36
38
40
42
44
46
48, 50
52
54
56
58
60

FIG. 2

FIG. 4

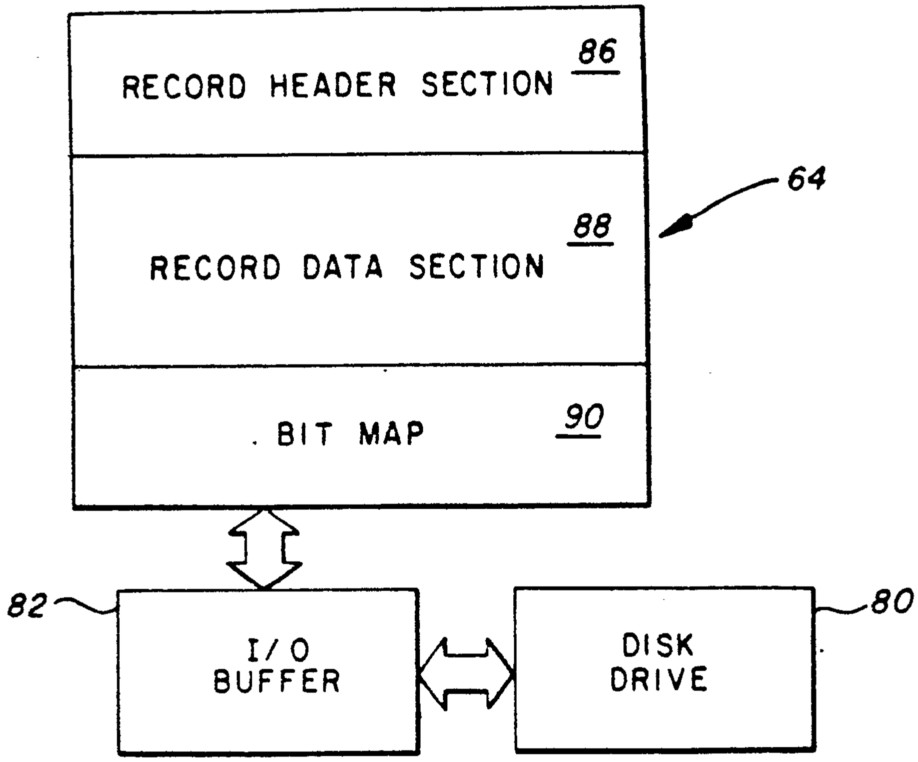
RECORD HEADER SECTION
86
RECORD DATA SECTION
88
64
BIT MAP
90
82
I/O
BUFFER
DISK
DRIVE
80

FIG. 5

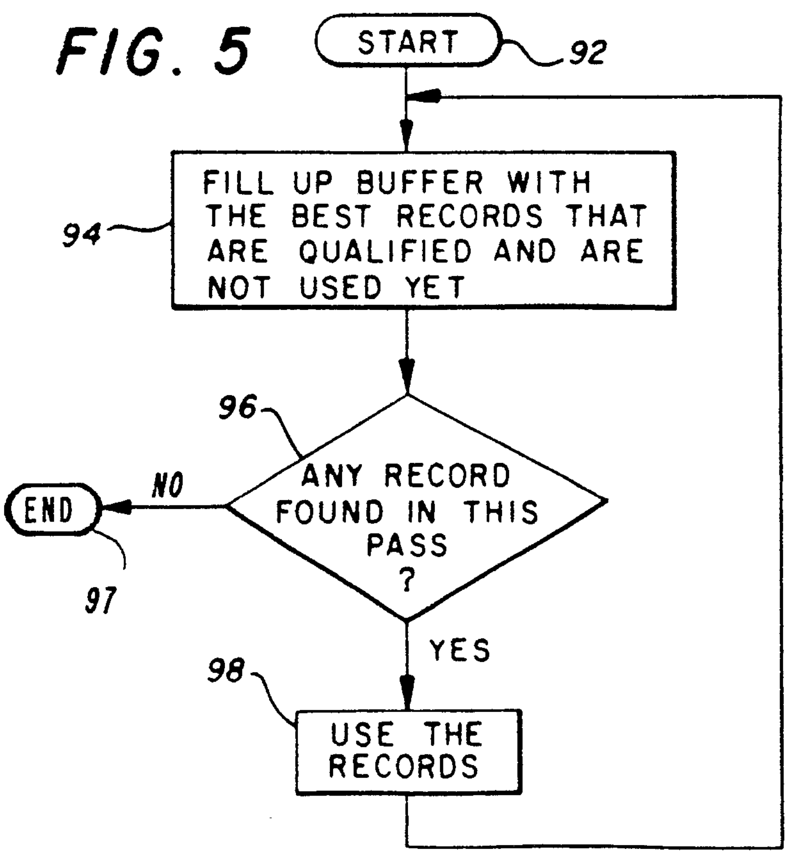
START
92
FILL UP BUFFER WITH THE BEST RECORDS THAT ARE QUALIFIED AND ARE NOT USED YET
94
96
ANY RECORD FOUND IN THIS PASS ?
NO
END
97
YES
98
USE THE RECORDS

FIG. 6

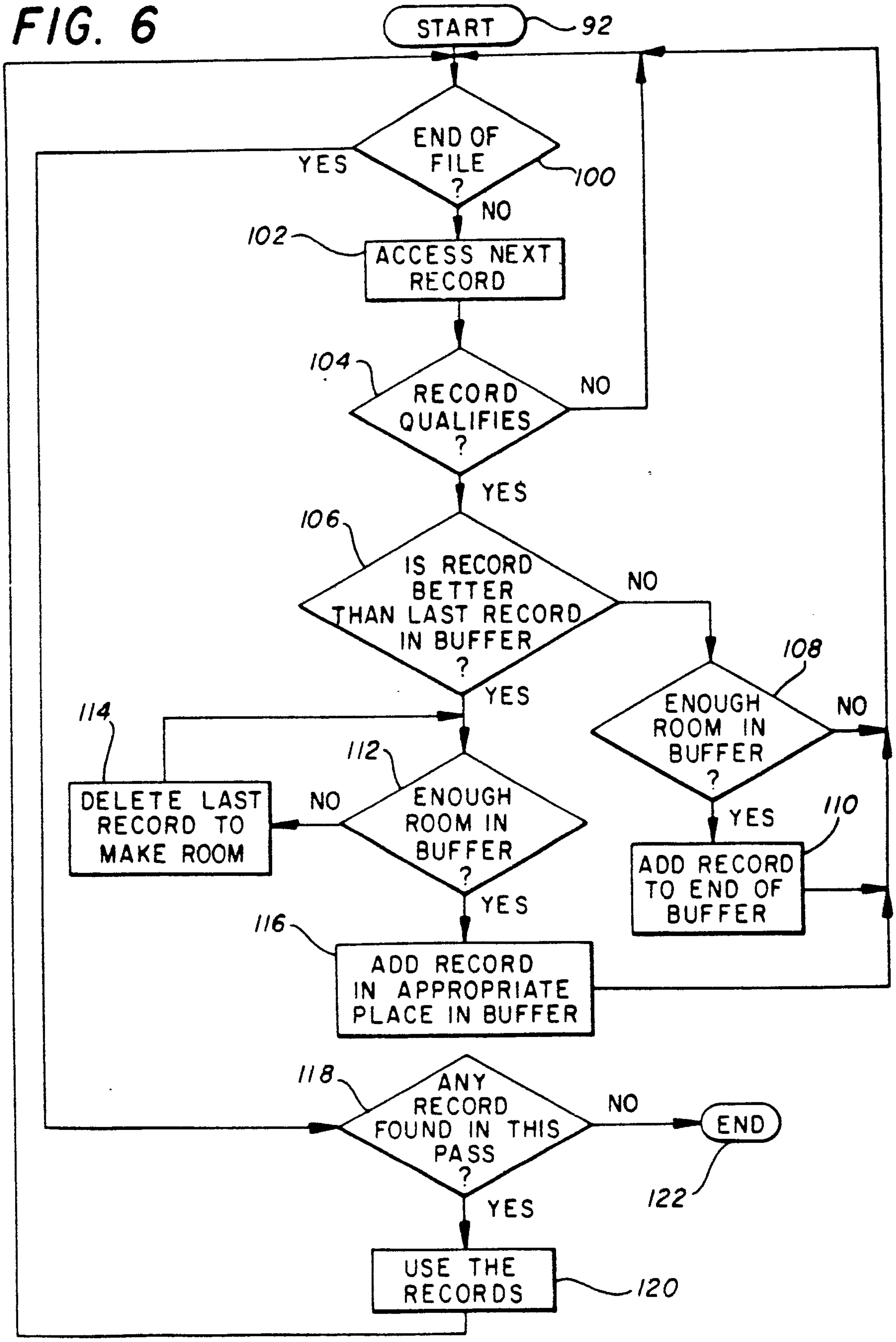
START
92
END OF FILE ?
100
YES
NO
102
ACCESS NEXT RECORD
104
RECORD QUALIFIES ?
NO
YES
106
IS RECORD BETTER THAN LAST RECORD IN BUFFER ?
NO
YES
108
ENOUGH ROOM IN BUFFER ?
NO
YES
110
ADD RECORD TO END OF BUFFER
114
DELETE LAST RECORD TO MAKE ROOM
112
ENOUGH ROOM IN BUFFER ?
NO
YES
116
ADD RECORD IN APPROPRIATE PLACE IN BUFFER
118
ANY RECORD FOUND IN THIS PASS ?
NO
END
122
YES
USE THE RECORDS
120

FIG. 7

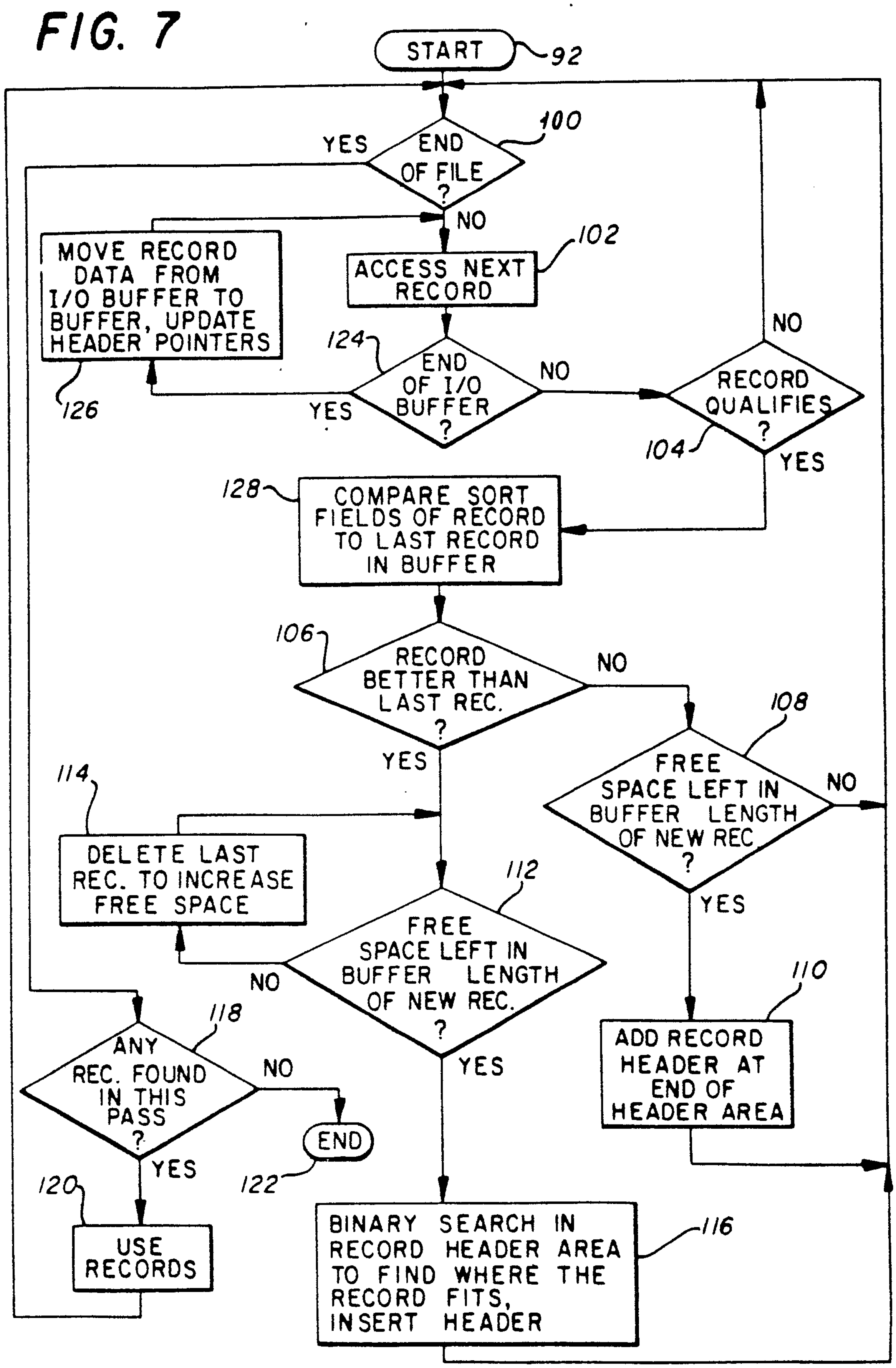
START
92
100
YES
END OF FILE ?
NO
MOVE RECORD DATA FROM I/O BUFFER TO BUFFER, UPDATE HEADER POINTERS
126
ACCESS NEXT RECORD
102
124
END OF I/O BUFFER ?
YES
NO
RECORD QUALIFIES ?
104
NO
YES
128
COMPARE SORT FIELDS OF RECORD TO LAST RECORD IN BUFFER
106
RECORD BETTER THAN LAST REC. ?
NO
YES
108
FREE SPACE LEFT IN BUFFER LENGTH OF NEW REC ?
NO
YES
114
DELETE LAST REC. TO INCREASE FREE SPACE
112
FREE SPACE LEFT IN BUFFER LENGTH OF NEW REC. ?
NO
YES
110
ADD RECORD HEADER AT END OF HEADER AREA
118
ANY REC. FOUND IN THIS PASS ?
NO
YES
END
122
120
USE RECORDS
BINARY SEARCH IN RECORD HEADER AREA TO FIND WHERE THE RECORD FITS, INSERT HEADER
116

FIG. 8

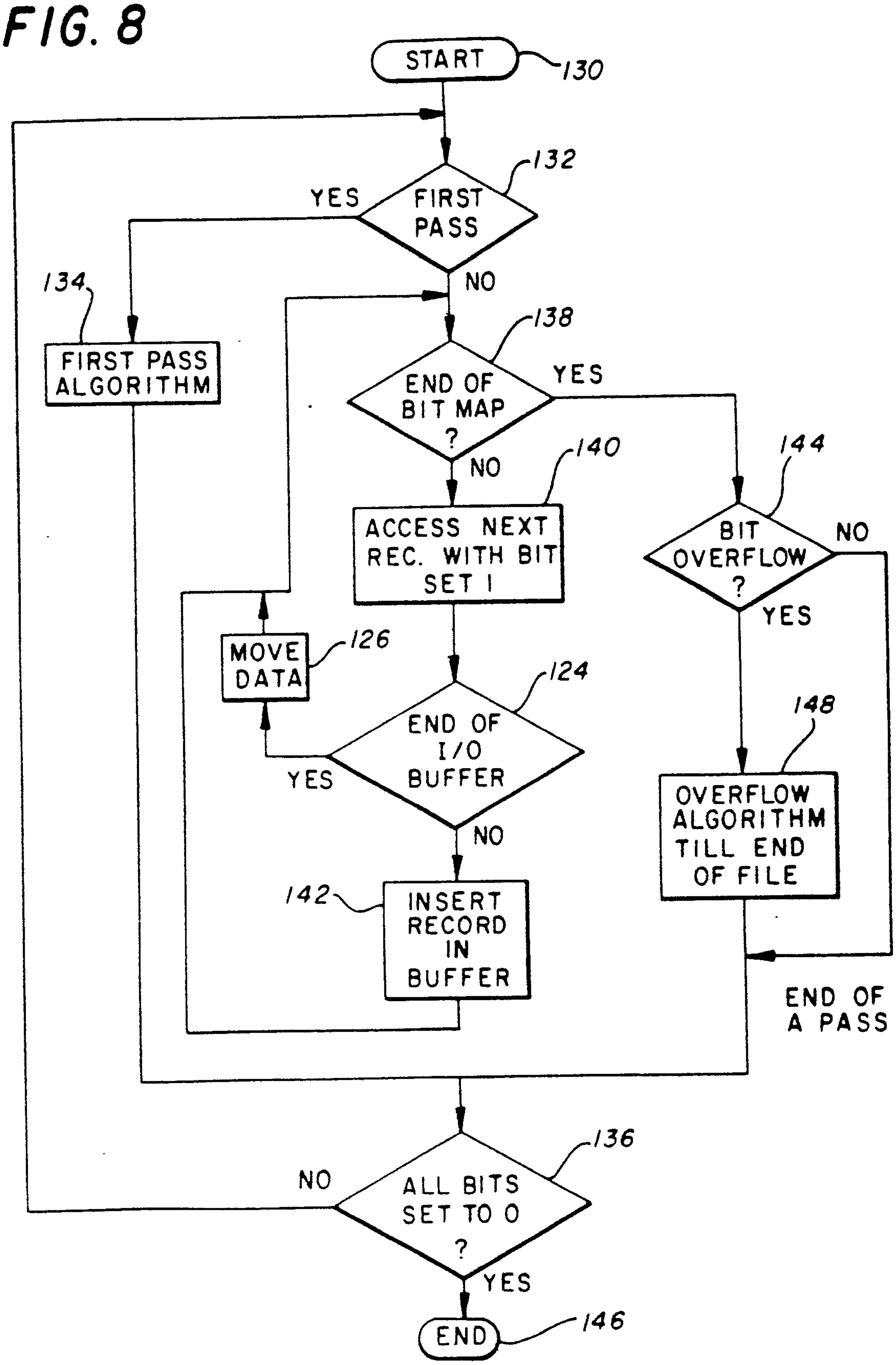
START
130
132
FIRST PASS
YES
NO
134
FIRST PASS ALGORITHM
138
END OF BIT MAP ?
YES
NO
140
ACCESS NEXT REC. WITH BIT SET I
144
BIT OVERFLOW ?
NO
YES
126
MOVE DATA
124
END OF I/O BUFFER
YES
NO
148
OVERFLOW ALGORITHM TILL END OF FILE
142
INSERT RECORD IN BUFFER
END OF A PASS
136
ALL BITS SET TO 0 ?
NO
YES
END
146